# EUROPÄISCHE PATENTSCHRIFT

(11) **EP 2 260 634 B1**
(45) Veröffentlichungstag und Bekanntmachung des Hinweises auf die Patenterteilung: **28.11.2012**
(21) Anmeldenummer: 09715565.9
(22) Anmeldetag: 27.02.2009
(51) Int. Cl.: H04L 29/08, G05B 19/418, G06F 9/46

(54) **INTERAKTIONSVERFAHREN ZWISCHEN SERVICE-ORIENTIERTEN KOMPONENTEN UND GERÄTEN**
INTERACTION METHOD BETWEEN SERVICE-ORIENTED COMPONENTS AND DEVICES
PROCÉDÉ D'INTERACTIONS ENTRE DES COMPOSANTS ORIENTÉS SERVICE ET DES APPAREILS

(30) Priorität: 29.02.2008 DE 102008002787
(43) Veröffentlichungstag der Anmeldung: 15.12.2010
(73) Patentinhaber: SCHNEIDER ELECTRIC AUTOMATION GMBH, 63500 Seligenstadt (DE)
(72) Erfinder: COLOMBO, Armando Walter, 63791 Karlstein (DE); MENDES, Joao Marco, 4990-162 Ponte de Lima (PT)
(74) Vertreter: Stoffregen, Hans-Herbert
(86) Internationale Anmeldenummer: PCT/EP2009/052356
(87) Internationale Veröffentlichungsnummer: WO 2009/106606

(56) Entgegenhaltungen:
- US-B1- 7 151 966
- MIGLIARDI M ET AL: "Standards based heterogeneous metacomputing: the design of HARNESS II" PARALLEL AND DISTRIBUTED PROCESSING SYMPOSIUM., PROCEEDINGS INTERNATIO NAL, IPDPS 2002, ABSTRACTS AND CD-ROM FT. LAUDERDALE, FL, USA 15-19 APRIL 2002, LOS ALAMITOS, CA, USA,IEEE COMPUT. SOC, US, 15. April 2002 (2002-04-15), Seiten 84-96, XP010591111 ISBN: 978-0-7695-1573-1
- BENJAMINS V R ET AL: "Web services: been there, done that?" IEEE INTELLIGENT SYSTEMS, IEEE SERVICE CENTER, NEW YORK, NY, US, Bd. 18, Nr. 1, 1. Januar 2003 (2003-01-01), Seiten 72-85, XP011095696 ISSN: 1094-7167
- HELAL S ET AL: "The Internet enterprise" APPLICATIONS AND THE INTERNET, 2002. (SAINT 2002). PROCEEDINGS. 2002 S YMPOSIUM ON NARA, JAPAN 28 JAN.-1 FEB. 2002, LOS ALAMITOS, CA, USA,IEEE COMPUT. SOC, US, 28. Januar 2002 (2002-01-28), Seiten 54-62, XP010587827 ISBN: 978-0-7695-1447-5
- JAMMES F ET AL: "Orchestration of Service-Oriented Manufacturing Processes" 10TH IEEE INTERNATIONAL CONFERENCE ON EMERGING TECHOLOGIES AND FACTORY AUTOMATION, IEEE, PISCATAWAY, NJ, USA, Bd. 1, 19. September 2005 (2005-09-19), Seiten 617-624, XP010905385 ISBN: 978-0-7803-9401-8

## Beschreibung

Die Erfindung bezieht sich auf ein Interaktionsverfahren zwischen service-orientierten Komponenten und Geräten nach dem Oberbegriff des Anspruchs 1.

In einem Aufsatz von Migliardi M. u. a.: "Standards based heterogenous metacomputing: The Design of HARNESS II", parallel in Distributed Processing Symposium, Proceedings International, IPDPS 2002, ist ein auf Web-Services basierendes Interaktionsverfahren zwischen einem Client-Host und einem Provider-Host beschrieben. Die Ausführung eines Web-Services erfolgt in Phasen. Die Services werden von einem Anwendungs-Server bereitgestellt der in einem Provider-Host implementiert ist. Ferner werden die Services in einem Look-Up-Host registriert. Eine Service-Anfrage, erfolgt über eine Client-Anwendung, die in einem Client-Host implementiert ist. Die Anfrage erfolgt über SOAP/HTTP. Ein Bezug zu service-orientierten Komponenten und Geräten, welche ihre Funktionalitäten über physikalische Ports anbieten, ist in dem Aufsatz nicht vorhanden.

Weitere Aufsätze, in denen das Konzept einer Interaktion zwischen Komponenten auf der Grundlage von Web-Services offenbart ist, sind beispielsweise der Aufsatz von Benjamins V. R. u. a.: "Web Services been there down set?" in IEEE Intelligent Systems, IEEE Service-Center, New York, 1. Januar 2003 sowie der Aufsatz von Helal S. u.a.: The Internet Enterprise" in Applications and the Internet, 2002, Proceeedings, 2002, Symposium on Nara, Japan, 28. Januar - 01. Februar 2002.

Üblicherweise ist in service-orientierten Systemen, insbesondere wenn die Verwendung von Webservices implementiert ist, ein Service ein Set von Ports. Jeder Port ist eine Instanz eines Port-Typs, welcher ein Set von Interaktions-Operationen und korrespondierenden Nachrichtentransfers zwischen dem Service-Provider und Service-Requester definiert.

Der Erfindung liegt die Aufgabe zu Grunde, ein Interaktionsverfahren der eingangs genannten Art derart weiterzubilden, dass der Zugriff und die Interaktion von heterogenen Kommunikationsmustern, welche von involvierten Geräten angeboten werden, vereinfacht wird. Ferner soll eine tiefere Verbindung von Services und deren Ports zu physikalischen Ports des Gerätes erreicht werden. Insgesamt soll die Flexibilität erweitert und die Rekonfiguration des Systems vereinfacht werden.

Die Aufgabe wird erfindungsgemäß durch die Merkmale des Anspruchs 1 gelöst

Durch die Erfindung wird somit ein Verfahren für die Verwendung von Lebenszyklen von Services zur Verfügung gestellt, die durch service-orientierte Geräte und zugehörige Anwendungen bereitgestellt werden. Die mechatronischen Geräte, welche Services bereitstellen und anfragen, sind Teil eines verteilten Steuerungsansatzes, der auf Serviceoptimierung auf Fertigungsstätten-Level in Automätisierungs- und Produktionssystemen basiert.

Das Verfahren umfasst verschiedene Phasen, welche bei der Interaktion von Service-Requestem (Anfragern) und Service-Providern (Anbietern) involviert sind, so dass der Requester die angebotenen Services benutzen kann. Zugriff zu den verschiedenen Phasen des Services wird Ober seine Ports bewerkstelligt. Der Service-Provider ist ein Mechanismus, der Services nach außen anbietet, die von den Service-Requestem benutzt werden können. Sowohl die Requester als auch die Provider sind Softwareanwendungen, Teil des Kommunikationsmoduls, welches in dem service-orientierten Gerät und unterstützenden Anwendungen implementiert ist. Ein Kommunikationsmodul kann auch beides, Requester und Provider, in einer Instanz einschließen, unter Bildung eines Client-Server-Kommunikationsmoduls.

Gemäß einem bevorzugten Verfahren bezieht ein von einer Komponente wie z. B. einem Gerät zur Verfügung gestellter Service mehrere Interaktions-Phasen mit seinen Requestern ein, die spezifischen Protokollen folgen müssen, welche mit den Instanzen des Port-Typs wie z. B. Ports verknüpft sind.

Der Zugriff auf einen Service wird durch Befolgen einer Sequenz von unterschiedlichen Ports hergestellt, welche mit den Phasen verknüpft sind. Die Phasen sind:
Auffindungs-Phase: Fähigkeit zum Auffinden und Registrieren von Services, welche unterschiedliche, durch ihre Protokolle beschriebene Verfahren verwenden.
Verhandlungs-Phase: Ist geeignet in die Betriebs-Phase einzutreten, Verhandlung muss zwischen dem Service-Requester und Service-Provider stattfinden.
Betriebs-Phase: Haupt-Ports sind diejenigen, welche den Betriebs-Phasen entsprechen (diese stellen die Hauptressource und Funktionalität des Services und den Kernel (Kern) des Requester-Interesses zur Verfügung). Logische Ports des Services können ebenfalls physikalischen Ports des Provider-Geräts (wie beispielsweise ein Förderband) entsprechen, wodurch eine inhaltsorientierte (assoziative) Perspektive bereitgestellt wird.
Abschluss-Phase: Endgültiges Setup nach der Betriebs-Phase.

Die Interaktion ihrerseits ist aufgeteilt in die vier Phasen. Zu jeder Phase korrespondieren ein oder mehrere Port-Typen mit dem dazugehörigen Zugriffs-Protokoll (Access-Protocol), welches die Interaktionsregeln definiert. Der Zugriff des Requesters wird ausgeführt durch die Instanzen der Port-Typen.

Eine weitere bevorzugte Verfahrensweise zeichnet sich dadurch aus, dass die Ports dynamisch von korrespondierenden Port-Typen und Zugangs-Protokollen erstellt werden können, wenn dieses benötigt wird.

Des Weiteren zeichnet sich das Verfahren durch die Fähigkeit aus, dass gleiche Ports für dieselbe Funktionalität zur Verfügung gestellt werden, jedoch von unterschiedlichem Port-Typ und Protokoll instantiiert sind.

Insbesondere können logische Ports der Betriebs-Phase direkt zu den physikalischen Ports des Gerätes zugeordnet werden.

Das Ziel der Erfindung ist die zur Verfügungstellung der Formalisierung von verschiedenen Phasen der Verwendung eines Services, welcher von Geräten und Port-Typen/Protokoll-Mechanismen zur Verfügung gestellt wird, um Port-Instanzen für verschiedene Phasen zu erzeugen.

Die folgenden Themen fassen die anfänglichen Vorteile der Anwendung der Idee zusammen:
Definition eines gemeinsamen Lebenszyklus für die Benutzung eines Services, der gemeinsam zwischen Geräten benutzt werden kann, und deren konsequente Interaktions-Prozesse und Verhalten.
Die Verfügbarkeit von unterschiedlichen Protokollen für dieselbe Funktionalität und dynamische Generierung von Ports vereinfacht den Zugriff und die Interaktion von heterogenen Kommunikationsmustern, welche von involvierten Geräten angeboten werden.
Tiefere Verbindung von Services und deren Ports zu physikalischen Ports des Gerätes.
Erweiterte Flexibilität und konsequente Rekonfiguration, die von verteilten Steuerungssystemen gefordert wird.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmenden bevorzugten Ausführungsbeispielen.

Es zeigen:
- Fig. 1: eine schematische Darstellung von Service-Interaktions-Phasen und deren Abbildung in Port-Typen und Port-Instanzen,
- Fig. 2: ein Sequenzdiagramm der Interaktions-Phasen der Services und
- Fig. 3: die schematische Darstellung eines Übergabe-Services eines bidirektionalen Förderbandes mit zugehörigen Ports.

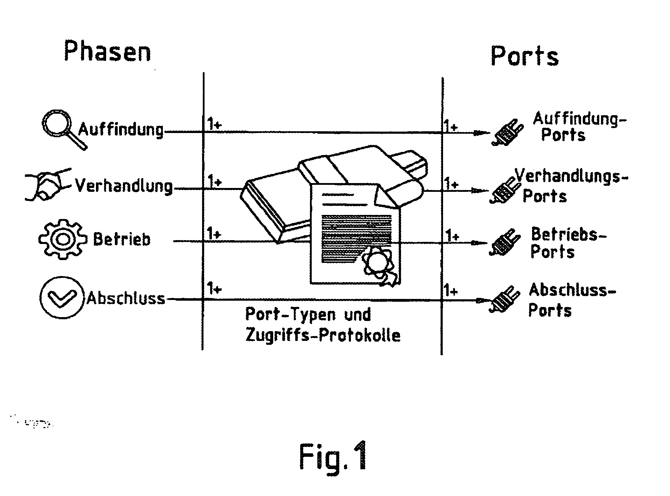

Fig. 1 zeigt ein Vier-Phasen-Interaktionsmuster basierend auf Port-Typ-Protokollen. Der Zugriff auf einen Service wird durch Befolgen einer Sequenz von unterschiedlichen Ports wie beispielsweise Auffindungs-Ports, Verhandlungs-Ports, Betriebs-Ports sowie Abschluss-Ports hergestellt, welche mit Phasen wie beispielsweise Auffindungs-Phase, Verhandlungs-Phase, Betriebs-Phase und Abschluss-Phase verknüpft sind.

Die Auffindungs-Phase beschreibt die Fähigkeit zum Auffinden von Services, welche unterschiedliche, durch ihre Protokolle beschriebene Verfahren verwenden.

Die Verhandlungs-Phase ist geeignet, in die Betriebs-Phase einzutreten. Eine Verhandlung muss zwischen dem Service-Requester und dem Service-Provider stattfinden.

Die Betriebs-Phase ist mit den Betriebs-Ports verknüpft. Die Betriebs-Ports bzw. Haupt-Ports sind diejenigen, welche den Betriebs-Phasen entsprechen. Diese stellen die Hauptressourcen und Funktionalität der Services zur Verfügung, die den Anforderungen des Requesters entsprechen. Logische Ports des Services können ebenfalls physikalischen Ports des Provider-Geräts, wie beispielsweise einem Förderband, entsprechen, wodurch eine inhaltsorientierte Perspektive bereitgestellt wird.

Schließlich folgt die Abschluss-Phase, nach der ein endgültiges Setup nach der Betriebs-Phase erfolgt.

Wie der Fig. 1 zu entnehmen ist, ist die Interaktion in vier Phasen aufgeteilt, wobei jede Phase ein oder mehrere Port-Typen mit dem zugehörigen Zugriffs-Protokoll darstellt. Der Zugriff auf den Service durch den Service-Requester wird durch die Instanzen der Port-Typen ausgeführt.

In service-orientierten Systemen werden Interaktionen hergestellt durch Anfrage von existierenden Services durch einen Client, welcher diesen nutzen und offensichtlich den Prozess koordinieren möchte.

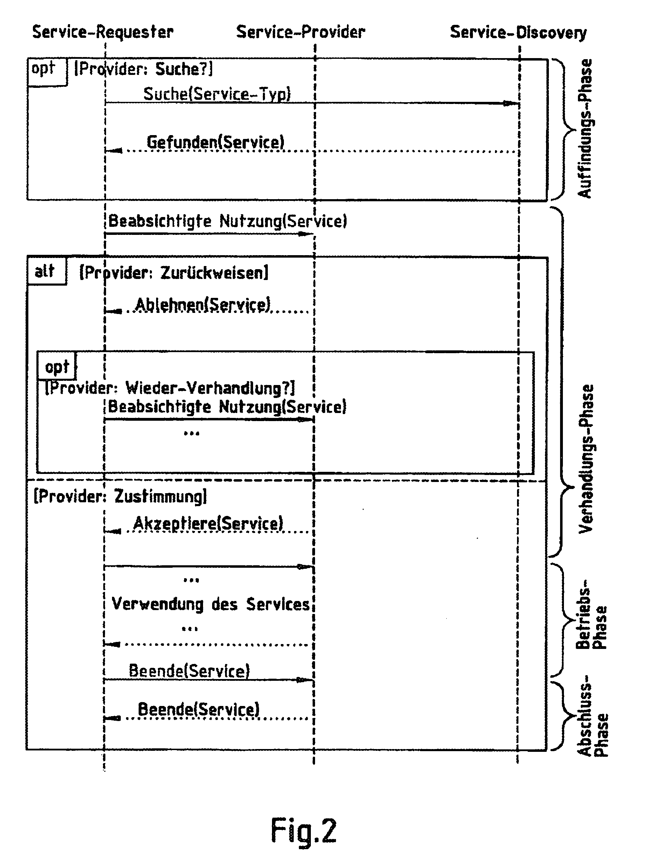

Fig. 2 zeigt ein Sequenzdiagramm des Prozesses, um mit Services unter Verwendung von vier Phasen zu interagieren.

Die Service-Discovery gemäß Fig. 2 kann jeder Auffindungs-Mechanismus sein, um Services zu lokalisieren.

Vor der Benutzung des Services muss der Service-Requester nach einem spezifischen Service suchen, der seine Anforderungen erfüllt. Nach Beschaffung eines den Service beschreibenden Interfaces kann dieses den Service-Provider kontaktieren. Offensichtlich muss dieser zunächst ein Angebot machen, um den Service zu nutzen. Wenn dieses nicht akzeptiert wird, kann es mit einer komplexeren Verhandlung (Negotiation) mit dem Service-Provider fortfahren, wenn dieses zugelassen ist.

Die Akzeptanz der Anfrage bzw. Benutzung eines Services initiiert die Betriebs-Phase, in welcher der Service benutzt wird. In dieser Phase ist es wichtig, die Aktivitäten des Service-Requesters und des Service-Providers zu synchronisieren. Nach der Betriebs-Phase kann die Abschlussphase Prozesse zur Erledigung der Benutzung eines Services einrichten.

Mehrere zusätzliche Merkmale werden ebenfalls erwähnt:
Ein wichtiges Merkmal ist, dass die Ports dynamisch von korrespondierenden Port-Typen und Zugangs-Protokollen erstellt werden können, wenn dieses benötigt wird. Wenn ein betriebsfähiger Port nicht existiert, jedoch für eine spezifische Anfrage eines Services benötigt wird, kann dieser für diese Situation, basierend auf einem Port-Typ und verbundenen Protokoll, erzeugt werden.
Fähigkeit gleiche Ports für dieselbe Funktionalität zur Verfügung zu stellen, jedoch instanziiert (instantiated) von unterschiedlichem Port-Typ und Protokoll. Beispielsweise kann ein Requester nur auf einen Service zugreifen, welcher ein spezifisches Protokoll benutzt und andere können ein vollständig unterschiedliches Protokoll benötigen, um mit dem Service zu interagieren. Letztendlich benötigen beide dieselbe Funktionalität für einen gegebenen Service.
Logische Ports der Betriebs-Phase können direkt zu den physikalischen Ports des Gerätes zugeordnet werden. Zum Beispiel stellt ein Förderband mit Eingangs- und Ausgangs-Ports einen Transfer-Service mit logischen betriebsfähigen Ports zur Verfügung, welche physikalischen Ports entsprechen.

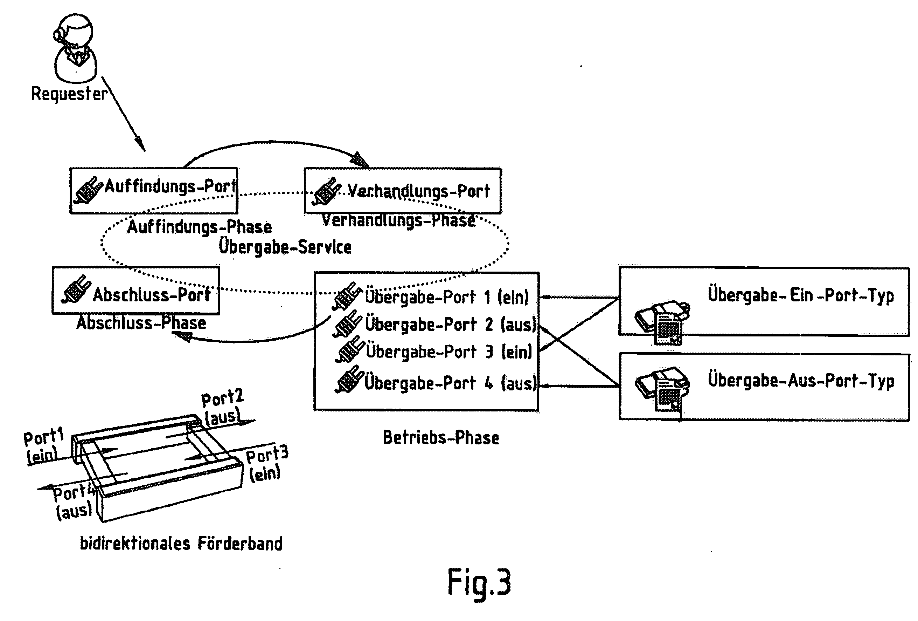

Das Verfahren wird angewendet auf ein mechatronisches Gerät entsprechend eines bidirektionlen Förderbandes mit vier unterschiedlichen Ports PORT1, PORT2, PORT3 und PORT4, über die Paletten über physikalische Ports wie in Fig. 3 dargestellt, eingeführt und ausgeführt werden können. Diese Ports sollten verwendet werden, um mit anderen Geräten, z. B. wie andere Förderbänder, verbunden zu werden. Aus der Sicht des Services stellt das Förderband einen Service zur Verfügung, der die notwendigen Operationen handhabt, um Übergabebewegungen über die vier logischen Ports (entsprechend zu den physikalischen Ports) durchzuführen. Dieser Service muss angefordert werden, um sich in der entsprechenden Weise zu verhalten. Requester können andere Förderbänder sein, welche mit diesem über Ports verbunden sind. Der Service kann durch einen spezifischen Auffindungs-Port (Discovery Port) wie Übergabe-PORT1 aufgefunden und registriert werden. Nach Auffindung kann der Requester mit der Verhandlung des Services fortsetzen, welche einfache Muster oder komplexere Vorschläge einschließende Interaktionen beinhalten. Wenn die Verhandlung erfolgreich abgeschlossen ist, kann auf die Ausführung der Services über einen spezifischen Betriebs-Port wie Übergabe-PORT1, der angefragt wurde, zugegriffen werden. In dem Beispiel existieren vier Übergabe-Ports, welche die Instanzen von zwei unterschiedlichen Port-Typen (Transfer in/out) und verbundenen Zugriffsprotokoll sind. Das Ergebnis der Operation kann die letzte Phase einschließen, die durch den Abschluss-Port gesteuert ist.

## Patentansprüche

1. Interaktionsverfahren zwischen service-orientierten Komponenten und Geräten, wobei von einem Service-Provider angebotene Services durch einen Service-Requester aufgerufen werden,
**dadurch gekennzeichnet,**
**dass** die in den Geräten implementierten Service-Provider und/oder Service-Requester Funktionen von physikalischen Übergabe-Ports zur Verbindung der Geräte und Übergabe von Produkten zwischen den Geräten als Übergabe-Service anbieten und/oder anfordern, dass jeder Übergabe-Service ein Set mit Auffindungs-Port, Verhandlungs-Port, Übergabe-Port und Abschluss-Port als logische Ports umfasst und jeder logische Port eine Instanz eines Port-Typs ist, welcher ein Set von Interaktions-Operationen und korrespondierenden Nachrichtentransfers zwischen dem Service-Provider und Service-Requester definiert, wobei die logischen Übergabe-Ports dynamisch von korrespondierenden Port-Typen und Zugangs-Protokollen erstellt werden, dass der von dem Service-Provider zur Verfügung gestellte Übergabe-Service durch eine Auffindungsphase, eine Verhandlungs-Phase, eine Betriebs-Phase sowie eine Abschluss-Phase als Interaktions-Phasen mit dem Service-Requester ausführt wird, wobei die Interaktions-Phasen spezifischen, mit den Instanzen des Port-Typs verknüpften Protokollen folgen und dass während der Betriebs-Phase den physikalischen Übergabe-Ports des Gerätes zugeordnete logische Übergabe-Ports aufgerufen werden und ein Zugriff auf den Service durch eine Sequenz von unterschiedlichen mit den Interaktions-Phasen verknüpften logischen Ports hergestellt wird.

2. Interaktionsverfahren nach Anspruch 1,
**dadurch gekennzeichnet,**
**dass** zu jeder Interaktions-Phase ein oder mehrere Port-Typen mit zugehörigem Zugriff-Protokoll, welches Interaktionsregeln definiert, korrespondieren.

3. Interaktionsverfahren nach Anspruch 1 oder 2,
**dadurch gekennzeichnet,**
**dass** ein Zugriff des Service-Requester auf den Service durch die Instanzen der Port-Typen ausgeführt wird.

4. Interaktionsverfahren nach zumindest einem der vorhergehenden Ansprüche,
**dadurch gekennzeichnet,**
**dass** Ports für dieselbe Funktionalität zur Verfügung gestellt werden, welche jedoch von unterschiedlichen Port-Typen und Protokollen instantiiert sind.

5. Interaktionsverfahren nach zumindest einem der vorhergehenden Ansprüche,
**dadurch gekennzeichnet,**
**dass** der Service-Requester zum Auffinden bzw. Lokalisieren eines spezifischen Services einen Service-Discovery (Auffindungs-Mechanismus) benutzt.

## Claims

1. Interaction process between service-oriented components and devices, wherein services offered by a service provider are requested by a service requester,
**characterized in**
**that** the service provider and/or service requester implemented in the devices offer and/or request as transfer service functions of physical transfer ports for connecting the devices and transferring the products between the devices, that each transfer service comprises as logical ports a set of discovery port, negotiation port, transfer port and completion port and each logical port is an instance of a port type which defines a set of interaction operations and corresponding message transfers between the service provider and the service requester, said logical transfer ports being set up dynamically by corresponding port types and access protocols, that the transfer service provided by the service provider is implemented through a discovery phase, a negotiation phase, an operational phase as well as a completion phase as interaction phases with the service requester, said interaction phases following specific protocols linked to the instances of the port type, and that during the operational phase logical ports are requested which are assigned directly to the physical ports of a service-oriented device and an access to the service is generated through a sequence of different logical ports that are linked to the interaction phases.

2. Interaction process of claim 1,
**characterized in**
**that** one or more port types with associated access protocol, which defines interaction rules, correspond to each interaction phase.

3. Interaction process of claim 1 or 2,
**characterized in**
**that** access to the service by the service requester is carried out via the instances of the port types.

4. Interaction process of at least one of the preceding claims,
**characterized in**
**that** ports are provided for the same functionality, but are instantiated by different port types and protocols.

5. Interaction process of at least one of the preceding claims,
**characterized in**
**that** the service requester uses a service discovery (discovery mechanism) for discovering, respectively localizing a specific service.

## Revendications

1. Procédé d'interactions entre des composants et des appareils orientés service, dans lequel des services proposés par un fournisseur de services sont appelés par un demandeur de services,
**caractérisé en ce**
**que** les fournisseurs de services et/ou demandeurs de services implémentés dans les appareils proposent et/ou demandent des fonctions de ports de transfert physiques pour connecter les appareils et transférer des produits entre les appareils en tant que service de transfert, que chaque service de transfert comprend un ensemble constitué d'un port de détection, d'un port de négociation, d'un port de transfert et d'un port de terminaison en tant que ports logiques, et chaque port logique est une instance d'un type de port qui définit un ensemble d'opérations d'interaction et de transferts d'informations correspondant entre le fournisseur de services et le demandeur de services, sachant que les ports de transfert logiques sont établis dynamiquement par des types de ports et des protocoles d'accès correspondant, que le service de transfert mis à disposition par le fournisseur de services est réalisé par une phase de détection, une phase de négociation, une phase opérationnelle et une phase de terminaison en tant que phases d'interaction avec le demandeur de services, sachant que les phases d'interaction suivent des protocoles spécifiques liés aux instances du type de port et que pendant la phase opérationnelle, des ports de transfert logiques associés aux ports de transfert physiques de l'appareil sont appelés et un accès au service est établi par une séquence de différents ports logiques liés aux phases d'interaction.

2. Procédé d'interactions selon la revendication 1,
**caractérisé en ce**
**qu'**à chaque phase d'interaction correspond(ent) un ou plusieurs type(s) de port avec le protocole d'accès associé qui définit des règles d'interaction.

3. Procédé d'interactions selon la revendication 1 ou 2,
**caractérisé en ce**
**qu'**un accès au service du demandeur de services est réalisé par les instances des types de port.

4. Procédé d'interactions selon au moins une des revendications précédentes,
**caractérisé en ce**
**que** sont mis à disposition pour la même fonctionnalité des ports qui ont toutefois été instanciés par différents types de port et protocoles.

5. Procédé d'interactions selon au moins une des revendications précédentes ,
**caractérisé en ce**
**que** le demandeur de services utilise un *service discovery* (mécanisme de détection) pour détecter ou localiser un service spécifique.
